(19) Europäisches Patentamt
European Patent Office
Office européen des brevets

(11) Publication number: **0 103 154**
**A1**

(12) **EUROPEAN PATENT APPLICATION**

(21) Application number: 83107766.4

(22) Date of filing: 06.08.83

(51) Int. Cl.³: C 08 G 65/44

(30) Priority: 16.08.82 US 408601

(43) Date of publication of application: 21.03.84 Bulletin 84/12

(84) Designated Contracting States: DE FR GB IT NL

(71) Applicant: GENERAL ELECTRIC COMPANY, 1 River Road, Schenectady New York 12305 (US)

(72) Inventor: Aycock, David Frederick, 5 Hancock Drive, Glenmont New York, 12077 (US)

(74) Representative: Schüler, Horst, Dr. et al, Kaiserstrasse 41, D-6000 Frankfurt/Main 1 (DE)

(54) **Continuous process for preparation of polyphenylene ether resin using high bromide ion concentration.**

(57) An improved process in the continuous formation of polyphenylene ether resin by the oxidative coupling of a phenol in the presence of a copper-amine complex catalyst is described. The improvement comprises initiating the oxidative coupling reaction in the additional presence of a high bromide ion concentration such that the molar ratio of bromide ion to phenolic starting matter is not less than 1 : 35. This enables formation, at relatively low levels of catalytic copper, of higher molecular weight polymer.

EP 0 103 154 A1

10214-8CN-3730

# CONTINUOUS PROCESS FOR PREPARATION OF POLYPHENYLENE ETHER RESIN USING HIGH BROMIDE ION CONCENTRATION

## BACKGROUND OF THE INVENTION

The polyphenylene ether resins (or polyphenylene oxide resins, as they are also termed) are a well-known family of thermoplastic engineering resins. A wide variety of these resins and a number of methods for their preparation are disclosed in U.S. Patent Nos. 3,306,874 and 3,306,875 (to Hay) as well as in U.S. Patent Nos. 3,257,357 and 3,257,358 (to Stamatoff).

It is known that complexes of cuprous and cupric salts with certain primary, secondary and tertiary amines are effective as catalysts for use in processes of oxidative coupling of phenols to form polyphenylene ethers.

Hay in U.S. Patent No. 3,914,266 discloses a copper-amine complex prepared from cuprous or cupric bromide and a diamine, the catalytic activity of which is enhanced when used in conjunction with additional amounts of bromide ion and a tertiary, preferably tri-(lower alkyl) amine. Higher molecular weight polyphenylene ether resins can be produced, in batchwise procedures, using this catalyst in relatively small amounts, e.g., in the order of about 1 to 2 mols of copper (from the catalyst) for every 900 mols of phenolic starting material, e.g., 2,6-xylenol. For production of a polymer of the same molecular weight in a continuous process higher amounts of copper are

needed, e.g., in the order of about 1 mol of copper for every 300 mols of starting phenolic. If these higher amounts are used, however, it becomes more difficult to separate the copper portion of the used catalyst from the polymer.

## INTRODUCTION TO THE INVENTION

There has now been discovered an improvement in a continuous process for the oxidative coupling of phenols to form polyphenylene ether. In particular, it has been found that a continuous process is made more practical if conducted in the presence of relatively high concentrations of bromide ion, and specifically, using a molar ratio of bromide ion to the phenolic starting material of not less than about 1:35. Practice of the process involves the formation of polyphenylene ethers having 50 or more monomer units in the polymer chain in the presence of the aforementioned lower amounts of catalytic copper, and without the necessity for higher amounts which are more difficult to separate.

By way of illustration, bromide ion concentrations useful in accordance with the invention, stated as the molar ratio of bromide ion to phenolic monomer in the starting mixture, are 1:35, 1:34, 1:33, 1:32, 1:31, 1:30, 1:29 and so on. Bromide ion concentrations outside the scope of the invention include 1:36, 1:37, 1:38, 1:39, 1:40, and so forth.

The continuous nature of the process permits the re-cycling of the bromide ion back to the reaction zone for its reuse in the polymerization reaction, and this is an optional additional feature of the invention.

DESCRIPTION OF THE INVENTION

In general, the process of this invention may be carried out in accordance with the teachings of the above mentioned patents of Allan Hay, with the exception that the herein specified concentrations of bromide ion are to be employed.

In greater detail, the present process may be practiced by passing molecular oxygen or an oxygen containing gas through a mixture of one or more reactive phenols in a solution which also contains the dissolved catalyst components and a source of the additional amounts of bromide ion called for in the invention. As is well known, suitable phenolic reactants are those having the formula:

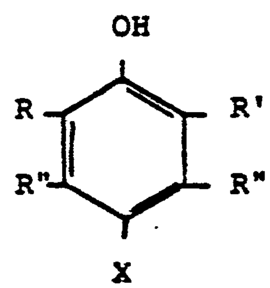

where X is a substituent selected from the group consisting of hydrogen, chlorine, bromine, and iodine; R is a monovalent substituent selected from the group consisting of hydrocarbon radicals, hydrocarbonoxy radicals, haloaryl radicals wherein all halogens are substituted on aromatic carbon atoms, and haloaryloxy radicals wherein all halogens are substituted on aromatic carbon atoms; R' is the same as R and, in addition, may be halogen, i.e., fluorine, chlorine, bromine, iodine; and R" is the same as R and, in addition, may be hydrogen or halogen, but preferably hydrogen.

Any of the copper-amine complex catalysts known to be effective for the oxidative coupling of phenols to polyphenylene ethers can be employed in the present process. Especially effective, and these are preferred, are the polymerization catalysts described by Hay in U.S. 3,306,874; U.S. 3,306,875 and in U.S. 3,914,266. These include catalyst systems comprised of a cuprous or cupric salt together with a hindered secondary diamine, e.g., N,N'-di-tert-butylethylene diamine, and a tertiary amine with low steric hindrance, e.g., n-butyldimethylamine. They may be used as such or optionally in further combination with secondary monoamines as described by Bennett, Jr. et al. in U.S. 4,092,294.

Special mention is made of the polymerization catalyst comprised of an admixture of

(i) a copper salt-amine complex in which the copper salt is cuprous bromide or cupric bromide and the amine has the formula

$$R^2HN - R^1 - NHR^2$$

where $R^1$ has at least two and no more than three carbon atoms separating the two nitrogen atoms and is $C_{2-4}$ alkylene or $C_{3-7}$ cycloalkylene and each $R^2$ is independently isopropyl or a $C_{4-8}$ tertiary alkyl group having no halogens on the alpha-carbon atom; and

(ii) a tri-(lower a-kyl) amine, preferably a tri-($C_1$-$C_6$alkyl) amine.

Typical examples of $R^1$,,above, are ethylene, 1,2- or 1,3-propylene, 1,2-, 1,3- or 2,3-butylene, various pentylene isomers having 2-3 carbon atoms separating the two free valences, phenylethylene, tolylethylene, 2-phenyl-1,2-propylene, cyclohexylethylene, 1,2- or 1,3-cyclohexylene, 1,2-cyclopropylene, 1,2-cyclobutylene, 1,2-cyclopentylene, etc.

Typical examples of $R^2$, above, are t-butyl, 2-methylbut-2-yl, 2-cyclohexylprop-2-yl, 2-methylpent-2-yl, 3-methylpent-3-yl, 2,3-dimethylbut-2-yl, 2-methylhex-2-yl, 3-methylhex-3-yl, 4-methylhept-4-yl, 3-ethylene-3-yl,2,3- and 2,4-dimethylpent-2-yl, 2-methylhept-2-yl, 3-methylhept-3-yl, 3-ethylene-3-yl, cumyl(2,2-dimethylbenzyl), etc. In addition, they can be cycloalkyl groups, such as, for example, 1-methylcyclopentyl, 1-methylcyclohexyl, etc.

Examples of the trialkyl amine include trimethyl amine, triethyl amine, dimethyl ethylamine, diethyl methylamine, tripropyl amine, tributyl amine, dimethylbutylamine, diethyl butyl amine, ethyl dibutylamine, diethyl propylamine, tripentyl amine, trihexyl amine, etc.

It is to be understood that the above catalysts are to be employed, in accordance with the invention, with a sufficient amount of bromide ion to provide a molar ratio of bromide ion to phenolic of at least 1:35, as stated previously.

The source of the bromide ions can be molecular bromine, or any water soluble bromine containing material. Preferably, the bromide source is hydrogen bromide, alkali metal bromide salts, for example, potassium bromide or sodium bromide, or an alkaline earth metal bromide salt, for example, calcium bromide or barium bromide. Mixtures of any of the foregoing may also be employed.

The reaction may be carried out in an excess amount of the amine, which functions as a solvent for the ingredients, or the reactants and catalyst components may be dissolved in some other reaction solvent which may be selected from among, for example, alcohols, ketones, hydrocarbons, chlorohydrocarbons, nitrohydrocarbons, ethers, esters, amides, mixed ether-esters, sulfoxides, etc.

The reaction proceeds at room temperature, e.g., about 25°C., preferably with cooling to control the heat of reaction such that the temperature of the mixture does not exceed 80°- 100°C. Generally, reaction temperatures may be permitted to vary between about 0° and about 50°C., and preferably between about 20° and about 30°C.

Superatmospheric pressure of 1 to 1000 psig, or higher, may be employed if desired.

In preferred cases the process is carried out continuously in a series of reaction vessels, with each reaction vessel containing a fresh supply of the catalyst. As the reaction solution is transferred from one reaction vessel to another, a polymer of progressively increasing molecular weight is achieved until the desired molecular weight has been attained.

The polymerization reaction may be terminated and the polymer separated from the reaction medium by use of any of the standard techniques for reactions of this kind, such as by the addition of aqueous acetic acid which terminates the reaction,followed by precipitation of the polymer with use of a suitable antisolvent, e.g., methanol.

The preferred end product is a polyphenylene ether homo- and copolymer of the formula:

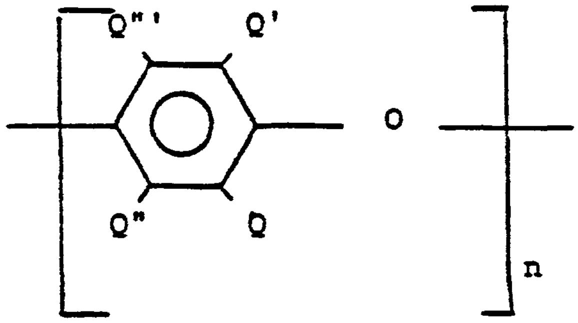

wherein Q, Q', Q", and Q"', are independently selected from the group consisting of hydrogen, halogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and n represents the total number of monomer units and is an integer of at least about 20.

The process is especially useful in the preparing of poly(2,6-dimethyl-1,4-phenylene ether) resin from 2,6-xylenol.

In carrying out the process of the invention, it can be advantageous to recycle the bromide ion portion of the reaction mixture. This may be accomplished in any convenient manner such as, for instance, by centrifuge separation of the water phase, which contains the bromide ions, from the reaction mixture, followed by distillation of the water and collection of the solid bromide containing residue.

The polyphenylene ether resin obtained by the present process is useful alone or together with other polymers and/or additives as engineering materials which may be extruded, injection molded, compression molded or otherwise shaped with articles of various sizes and contours.

## DESCRIPTION OF THE SPECIFIC EMBODIMENTS

The following examples illustrate the invention. They are intended for detailed descriptive purposes only and not as a limitation on the scope of the invention.

### EXAMPLE 1 (Comparison)

A reaction mixture for the preparation of poly(2,6-dimethyl-1,4-phenylene ether) was provided with the following composition:

| Ingredients | Amount, in mols |
|---|---|
| 2,6-xylenol | 900 |
| Copper (from cuprous or cupric bromide) | 1.5 |
| N,N'-di-tert-butylethylene diamine | 3 |
| Hydrogen bromide | 7 |
| n-butyldimethylamine | 40 |
| Dibutylamine | 12 |
| Molar ratio of bromide ion to 2,6-xylenol | 1:129 |

The ingredients were dissolved in toluene and the solution was placed in three individual reactor vessels arranged and interconnected in series, each being equipped with a mechanical stirrer.

The flow rate to the reactors was 31 gallons per hour. The respective reactor volumes were:
Reactor No. 1 = 10 gallons (7.5 gallon reactor level);
Reactor No. 2 = 30 gallons (24 gallon reactor level);
Reactor No. 3 = 50 gallons (40 gallon reactor level).

Oxygen was added to each reactor. Reactor 1 was operated at a temperature of 90 to 95°F.; Reactors 2 and 3 were operated at 115 to 120°F. Each reactor was sampled periodically to measure the intrinsic viscosity of the polymer. The results are set forth below in deciliters per gram as measured in solution in chloroform at 30°C.

| Time, min. | R#1 | R#2 | R#3 |
|---|---|---|---|
| 55 | -- | 0.41 | -- |
| 95 | -- | 0.34 | -- |
| 150 | -- | 0.27 | -- |
| 207 | 0.13 | -- | 0.32 |
| 267 | -- | 0.32 | -- |
| 307 | 0.11 | -- | -- |
| 342 | 0.14 | 0.40 | 0.37 |
| 407 | 0.17 | 0.35 | 0.36 |

It is shown that at this level of bromide ion concentration the intrinsic viscosity of the poly(2,6-dimethyl-1,4-phenylene ether) does not exceed 0.4 deciliters per gram (which corresponds to a weight average molecular weight of about 32,000). This bromide ion level is below the minimum amount called for in the invention.

EXAMPLE 2

The procedure of Example 1 was repeated, except the flow rate to the reactors was decreased to 19 gallons per hour. The resulting intrinsic viscosities of the polymer, in deciliters per gram, were as follows:

| Time, min. | R#2 | R#3 |
|---|---|---|
| 43 | 0.49 | -- |
| 78 | 0.34 | -- |
| 123 | 0.30 | -- |
| 223 | 0.28 | 0.30 |

When, however, sodium bromide was dissolved in the reaction mixture in reactor No. 1 in an amount sufficient to bring the bromide level up to 30 mols, i.e., molar ratio of bromide to 2,6-xylenol of 1:30 in accordance with the invention, the following results were observed:

| Time, min. | R#2 |
|---|---|
| 268 | 0.61 |
| 303 | 0.66 |

The higher intrinsic viscosities indicate a higher molecular weight, with 0.6 to 0.7 dl/g corresponding to a weight average molecular weight of 50,000 to 80,000.

EXAMPLE 3

The procedure of Example 1 was again repeated, except that the bromide ion concentration was increased to give a molar ratio of bromide ion to 2,6-xylenol of 1:26 in accordance with the invention. The resulting intrinsic viscosities for the polymer were as follows:

| Time, min. | R#1 | R#2 |
|---|---|---|
| 63 | -- | 0.59 |
| 110 | -- | 0.67 |
| 250 | 0.14 | 0.62 |
| 340 | -- | 0.70 |
| 390 | 0.12 | 0.65 |

Again, the higher bromide ion concentration results in a polymer of higher molecular weight in comparison with Example 1 as indicated by the higher intrinsic viscosities of Example 3.

All of the above mentioned patents and/or publications are incorporated herein by reference. Obviously, other modifications and variations of the invention are possible in light of the above disclosure. It is to be understood, therefore, that changes may be made in the particular embodiments shown which are within the full intended scope of the invention defined in the appended claims.

CLAIMS:

1. In a process for the production of a polyphenylene ether resin by the oxidative coupling of a phenol in the presence of a copper-amine catalyst, the improvement for controlling the molecular weight of the resin comprising including with the catalyst a source of bromide ion in an amount sufficient to provide a molar ratio of bromide ion to phenol of not less than about 1:35.

2. A process according to Claim 1, in which the bromide ion source is selected from the group consisting of elemental bromine, hydrogen bromide, alkali metal salts and alkaline earth metal salts.

3. A process according to Claim 1, in which the bromide ion source is hydrogen bromide.

4. A process according to Claim 1, in which the bromide ion source is sodium bromide.

5. A process according to Claim 1, in which the bromide ion source is both hydrogen bromide and sodium bromide.

6. A process according to Claim 1, in which the catalyst is formed from an admixture of a cupric or cuprous compound, a secondary diamine, a tertiary amine and optionally a secondary amine.

7. A process according to Claim 1, in which the catalyst is formed from a soluble source of copper, N,N'-ditertbutylethylene diamine, dimethylbutylamine, and dibutylamine.

8. A process according to Claim 1, in which the starting phenol is 2,6-xylenol.

9. A process according to Claim 1, in which the polyphenylene ether resin has the formula

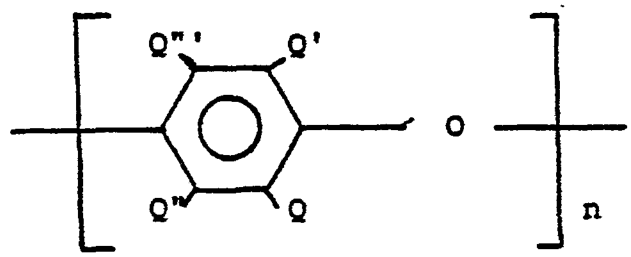

wherein Q, Q', Q" and Q"', are independently selected from the group consisting of hydrogen, halogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus; and n represents the total number of monomer units and is an integer of at least about 20.

10. A process according to Claim 1, in which the polyphenylene ether resin is poly(2,6-dimethyl-1,4-phenylene ether).

European Patent Office

# EUROPEAN SEARCH REPORT

0103154

Application number

EP 83 10 7766

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 733 299 (G.D. COOPER et al.) * Claims 1-7, 9-14; example 19; table 2, example 22 * | 1,2,4, 6-10 | C 08 G 65/44 |
| D,A | US-A-4 092 294 (J.G. BENNETT et al.) * Claims 1-3, 6, 7, 15-18; abstract; example 1; column 3, lines 25-27 * | 1-10 | |
| A | DE-A-1 745 201 (NORTH AMERICAN ROCKWELL CORP.) | | |
| | | | TECHNICAL FIELDS SEARCHED (Int. Cl. 3) |
| | | | C 08 G 65/00 |

The present search report has been drawn up for all claims

| Place of search | Date of completion of the search | Examiner |
|---|---|---|
| BERLIN | 09-11-1983 | HASS C V F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document